# EUROPÄISCHE PATENTSCHRIFT

(11) **EP 2 897 503 B1**
(45) Veröffentlichungstag und Bekanntmachung des Hinweises auf die Patenterteilung: **22.05.2019**
(21) Anmeldenummer: 13762136.3
(22) Anmeldetag: 16.09.2013
(51) Int. Cl.: A47J 27/04, F24C 7/02, F24C 11/00, F24C 15/32

(54) **GARGERÄT ZUM ZUBEREITEN VON SPEISEN**
COOKING DEVICE FOR PREPARING DISHES
APPAREIL DE CUISSON POUR LA PRÉPARATION D'ALIMENTS

(30) Priorität: 20.09.2012 CH 17032012
(43) Veröffentlichungstag der Anmeldung: 29.07.2015
(73) Patentinhaber: Helbling Technik AG, 8048 Zürich (CH)
(72) Erfinder: VON NIEDERHÄUSERN, Franz, 8405 Winterthur (CH); SIEGRIST, Thomas, 8700 Küsnacht (CH); SCHNEIDER, Fabian, 8600 Dübendorf (CH)
(74) Vertreter: Clerc, Natalia
(86) Internationale Anmeldenummer: PCT/EP2013/069097
(87) Internationale Veröffentlichungsnummer: WO 2014/044627

(56) Entgegenhaltungen:
- WO-A1-2012/011233
- CH-A2- 703 030
- US-A- 4 486 640
- US-A1- 2005 006 382
- US-A1- 2006 191 915

## Beschreibung

### TECHNISCHES GEBIET

Die vorliegende Erfindung betrifft ein Gargerät zum Zubereiten von Speisen gemäss Oberbegriff des Patentanspruchs 1 sowie ein System zur Zubereitung von Speisen gemäss Oberbegriff des Patentanspruchs 15.

### STAND DER TECHNIK

CH 703 030 offenbart ein System und ein Verfahren zur Zubereitung einer Speise, bei welchen die Speise in einer geschlossenen Verpackung in einen Steamer eingebracht wird. Im Steamer wird Dampf in die Verpackung eingebracht, ohne dass die Verpackung aussen mit Dampf beaufschlagt wird. Es ist vorgeschlagen, den Innenraum der Verpackung in mehrere Kammern zu unterteilen, um unterschiedliche Bestandteile einer Mahlzeit getrennt voneinander, jedoch gleichzeitig im Steamer zuzubereiten. Dabei kann jede Kammer unterschiedlich stark und unterschiedlich lange bedampft werden. Dies erlaubt die gleichzeitige Zubereitung von unterschiedlichen Nahrungsmitteln, z.B. von bereits vorgekochten und noch rohen Nahrungsmitteln.

WO 2011/121564 betrifft ebenfalls eine Vorrichtung zum Dampfgaren mit einem Aufstechmechanismus für eine Verpackung.

WO 2006/109042 zeigt ein Kochgerät mit einem Drehteller und mit mehreren, über dem Drehteller neben einander angeordneten Garmitteln, wie z.B. einen Grill, eine Mikrowelle, und einen Steamer. Jedes Garmittel bildet eine eigene Garzone innerhalb des Gargeräts. In einem runden Gefäss, welches in voneinander getrennte Kammern in Form von Kreissektoren unterteilt ist, sind unterschiedliche Nahrungsmittel angeordnet. Dieses Gefäss wird auf dem Drehteller an den Garmitteln vorbei rotiert, wobei Kontrollmittel die einzelnen Sektoren des Gefässes unter die Garmittel positionieren. Jedes Garmittel wird anschliessend von einer Steuerung in Abhängigkeit des sich darunter befindenden Nahrungsmittels aktiviert. Befindet sich ein Nahrungsmittel unterhalb eines Garmittels, welches nicht zur Zubereitung dieses speziellen Nahrungsmittels notwendig oder geeignet ist, so wird das Garmittel in dieser Drehposition des Gefässes nicht aktiviert. Derartige Geräte sind relativ teuer in der Herstellung. Des Weiteren sind viele Nahrungsmittel aufgrund ihrer Grösse und Form ungeeignet, um sich in die spitzwinkligen Sektoren des Gefässes einfüllen und sich daraus entnehmen zu lassen.

EP 1 275 333, EP 1 514 475 und DE 10 2007 039 379 offenbaren Dampfgargeräte mit untereinander angeordneten unterschiedlichen Garzonen. Sollen unterschiedliche Nahrungsmittel gleichzeitig zubereitet werden, müssen sie in unterschiedlichen Gefässen in die diversen Ebenen des Garraums eingebracht werden. Dies ist jedoch gerade bei der Zubereitung von portionierten kombinierten Fertiggerichten nicht erwünscht.

EP 2 068 084 schlägt ein System zum Fertiggaren von Speisen vor, bei welchem für neben einander angeordnete unterschiedliche Nahrungsmittel ein Mischklima berechnet wird und dieses dann im Garraum erzeugt wird. Dieses Mischklima ist stets ein Kompromiss und dürfte kaum zu optimalen Zubereitungsergebnissen führen.

### DARSTELLUNG DER ERFINDUNG

Es ist deshalb eine Aufgabe der Erfindung, die gleichzeitige Zubereitung von unterschiedlichen Nahrungsmitteln zu vereinfachen und zu verbessern.

Diese Aufgabe löst ein Gargerät mit den Merkmalen des Patentanspruchs 1 sowie ein System zum Zubereiten von Speisen mit den Merkmalen des Patentanspruchs 15.

Das erfindungsgemässe Gargerät weist einen Garraum zur Zubereitung von Speisen, eine Steuerung und mindestens ein Garmittel auf, welches nach Massgabe der Steuerung im Garraum auf die zuzubereitenden Speisen einwirkt. Der Garraum weist eine drehpositionsfeste Aufnahme für die zuzubereitenden Speisen auf, wobei der Garraum in mindestens zwei Garzonen unterteilt ist und wobei jede Garzone ein eigenes Garmittel aufweist, welches unabhängig von den Garmitteln der mindestens einen anderen Garzone ansteuerbar ist. Mindestens eine der Garzonen weist mehr als ein Garmittel auf, wobei mindestens ein erstes dieser Garmittel derselben Garzone einem anderen Zubereitungstyp entspricht als ein zweites dieser Garmittel derselben Garzone.

Dank der Verwendung von unterschiedlichen Garmitteln in derselben Zone lässt sich ein Nahrungsmittel optimal zubereiten. Beispielsweise kann es zuerst mit Dampf gargekocht und anschliessend überbacken werden oder mit dem Grill eine knackige Kruste erhalten.

Die einzelnen Garzonen können untereinander oder nebeneinander angeordnet sein. Auch bei Anordnung untereinander ist mindestens eine der Garzonen, vorzugsweise die oberste, mit einem zweiten Garmittel versehen bzw. beaufschlagbar. Sind die Garzonen untereinander angeordnet, lässt sich beispielsweise folgende vorgefertigte Mahlzeitenpackung verwenden: die einzelnen Speisen sind separat in einzelnen Abteilen der gemeinsamen Packung abgefüllt. Bei Gebrauch werden die einzelnen Abteile voneinander getrennt, z.B. mittels Sollbruchstellen. Die einzelnen Abteile werden in die unterschiedlichen Ebenen des Garraums eingeschoben und nach Massgabe des Speisetyps unterschiedlichen mit den Garmitteln beaufschlagt.

Vorzugsweise sind mindestens zwei Garzonen auf einer Ebene des Garraums neben einander liegend ausgebildet. Dadurch lassen sich Nahrungsmittel, welche in einem gemeinsamen Gefäss angeordnet sind, gemeinsam zubereiten. Die Zubereitung verläuft optimiert, da dasselbe Nahrungsmittel ohne Veränderung der Lage des Gefässes oder ohne weitere Einwirkung von aussen mit unterschiedlichen Zubereitungsarten beaufschlagt werden kann. Beispielsweise kann es zuerst mit Dampf oder Mikrowellenstrahlung gegart und anschliessend mit dem Grill gebräunt oder mit der Heizschlange überbacken werden. Dies erhöht die Flexibilität bei der Zubereitung von Nahrungsmitteln, insbesondere bei der Zubereitung von vorproportionierten Fertigmahlzeiten, welche aus unterschiedlichen Nahrungsmitteln zusammengesetzt sind und deren Nahrungsmitteln in der Verpackung einen unterschiedlichen Zubereitungsgrad aufweisen; beispielsweise rohes Gemüse, Salat, vorgekochte Sauce, rohes Fleisch und vorgegarte Kartoffeln.

Die nebeneinander liegenden Garzonen sind vorzugsweise gegenseitig offen ausgebildet. Dies erleichtert die Reinigung des Garraums und maximiert das als Garraum zur Verfügung stehende Volumen. Es ist jedoch auch möglich, die Garzonen mindestens teilweise, z.B. im Bereich der Garmittel, voneinander zu trennen. Hierfür lassen sich beispielsweise Trennbleche oder Gitter einsetzen.

Vorzugsweise ist jedes Garmittel ausschliesslich einer einzigen Garzone zugeordnet. Dadurch kann es bei Betätigung die in anderen Garzonen liegenden Nahrungsmittel nicht beeinflussen. Dies ist in einer Ausführungsform auch dann der Fall, wenn mehrere Garmittel pro Garzone vorhanden sind; d.h. auch diese Garmittel sind jeweils nur einer einzigen Garzone zugeordnet.

Es ist jedoch auch möglich, dass Garmittel vorhanden sind, welche mehreren Garzonen zugeordnet sind. Beispielsweise kann der ganze Garraum oder eine Gruppe von benachbarten Garzonen mit demselben Garmittel beaufschlagt werden; z.B. mit Dampf oder Heissluft.

In einer alternativen oder ergänzten Ausführungsform ist mindestens eine Garmittelzentrale vorhanden, welche mehrere Garmittel versorgt und somit unterschiedliche Garzonen bedient. Dabei können je nach Ausführungsform die einzelnen Garzonen alle gemeinsam bedient werden oder die Garmittelzentrale kann nach Massgabe einer Steuerung und entsprechender Hilfsmittel wie beispielsweise Ventile die einzelnen Garzonen unabhängig voneinander bedienen. Ist z.B. die Garmittelzentrale ein zentraler Heisslufterzeuger und die einzelnen Garmittel sind die Öffnungen oder Leitungen, welche die einzelnen Garzonen mit Heissluft beaufschlagen. So kann die Heissluft je nach Ausführungsform des Geräts in alle Garzonen gemeinsam oder über entsprechende Leitungen nur in ausgewählte Garzonen geleitet werden. Eine Garmittelzentrale kann auch die Elektronik von Heizstäben und die einzelnen Garmittel die in den Garzonen angeordneten Heizstäbe sein. Ein weiteres Beispiel ist ein zentraler Dampferzeuger und die entsprechenden Dampföffnungen oder -düsen in den einzelnen Garzonen.

Eine Garmittelzentrale mit individueller Bedienung der einzelnen Garzonen reduziert die Herstellungskosten des Geräts und minimiert zudem seine Grösse.

In einer bevorzugten Ausführungsform sind allen Garzonen mehrere Garmittel zugeordnet. Dies erhöht die Flexibilität bei der Zubereitung der Speisen, da somit mehrere Nahrungsmittel getrennt voneinander auf komplexe Art und Weise zubereitet werden können.

Vorzugsweise ist allen Garzonen mindestens ein eigenes Garmittel von demselben Zubereitungstyp zugeordnet. Dies ermöglicht es, alle Nahrungsmittel mit einer bevorzugten Grundzubereitungsart, z.B. mit Dampf oder Mikrowellen, zuzubereiten.

Vorzugsweise bestehen die Zubereitungstypen mindestens aus zwei Typen der folgenden Gruppe: Dampfgaren, Grillieren, Zubereitung mit Mikrowelle, Zubereitung mit Umluft, Zubereitung im Backofen mit Heizung.

Die Garmittel wirken vorzugsweise von oben auf das Nahrungsmittel ein. In anderen Ausführungsformen wirken einzelne oder alle Garmittel jedoch alternativ oder zusätzlich von unten und/oder von der Seite auf das Nahrungsmittel ein. So ist es beispielsweise möglich, dass das Gerät einen von oben wirkenden Grill, eine Unter- und Oberhitze eines konventionellen Backofens und/oder eine seitliche Heissluft- und/oder Wasserdampfbeaufschlagung aufweist. Auch die Mikrowelle kann an beliebigen Orten angeordnet sein.

Vorzugsweise bilden die Garzonen annähernd einen gemeinsamen Quader. In einer bevorzugten Ausführungsform ist die Aufnahme zur Aufnahme eines die Speisen beinhaltenden Gefässes ausgebildet, welches einen im Wesentlichen rechteckförmigen Grundriss aufweist. Dadurch lassen sich Gefässe mit rechteckförmigem Grundriss verwenden. Dies erhöht die Flexibilität in der Menge und Form der Nahrungsmittel. Das Gefäss lässt sich zudem platzsparend lagern und einfach herstellen. Beispielsweise sind drei oder vier Garzonen vorhanden.

Vorzugsweise sind die Garzonen so angeordnet und in ihrer Form so ausgebildet, dass sie zur gleichmässigen und gleichzeitigen Zubereitung von in einem im Wesentlichen quaderförmigen Gefäss angeordneten Speisen geeignet sind. Vorzugsweise sind die Garzonen mit einem Gebiet oder mehreren voneinander abgetrennten Gebieten des Gefässes deckungsgleich; bzw. die Gebiete des Gefässes sind mit einem oder mehreren Garzonen deckungsgleich.

Vorzugsweise ist im Garraum ein Positionierungsmittel zur lagedefinierten Positionierung eines die zuzubereitenden Speisen beinhaltendes Gefässes vorhanden, damit das Gefäss stets korrekt in den Garraum eingeführt ist und die Garzonen nicht mit falschen, d.h. lageverschobenen Zubereitungsparametern auf die Nahrungsmittel einwirken.

Vorzugsweise ist die Aufnahme eine Auflagefläche, so dass das Gefäss stets in korrektem Abstand zu den Garmitteln im Garraum angeordnet ist.

Das erfindungsgemässe System zur Zubereitung von Speisen umfasst ein oben beschriebenes Gargerät sowie ein Gefäss zur Aufnahme der zuzubereitenden Speisen, wobei das Gefäss in mindestens zwei neben einander liegende Bereiche unterteilt ist, welche so bemessen sind, dass jeder dieser Bereiche in einer eigenen Garzone oder in einer eigenen Gruppe von Garzonen des Garraums einbringbar ist.

Vorzugsweise ist das Gefäss für den bestimmungsgemässen Gebrauch im Gargerät mindestens teilweise nach oben offen ausgebildet, wobei vorzugsweise eine vor Gebrauch entfernbare Abdeckung eine obere Öffnung des Gefässes verschliesst. Es hat sich erstaunlicherweise gezeigt, dass selbst beim Dampfgaren die einzelnen Bereiche des Gefässes nicht vollständig voneinander getrennt sein müssen. Eine einfache Trennwand reicht vollständig aus, damit die Nahrungsmittel unterschiedlich zubereitet werden können. Durch die Verwendung eines offenen Gefässes ist ein Dampfgaren und anschliessendes Grillieren oder Überbacken möglich, ohne dass eine unterbrechende Handlung des Benützers notwendig wäre.

Vorzugsweise ist das Gefäss mit mindestens einer Positionierhilfe zur vordefinierten Positionierung des Gefässes im Garraum versehen. Vorzugsweise weist der Garraum ein Gegenstück zu dieser Positionierhilfe auf.

Ein in diesem Text beschriebenes Gefäss zur Verwendung in einem oben beschriebenen Gargerät ist in mindestens zwei Bereiche unterteilt, wobei diese Bereiche in ihrer Grösse annähernd einer oder mehreren Garzonen des Gargeräts entsprechen.

In einer Ausführungsform ist im Gefäss eine vordefinierte Flüssigkeitsmenge, insbesondere Wasser, vorhanden, welche zum Dampfgaren notwendig ist. In diesem Fall muss das Gargerät selber keinen Wasserspeicher oder Boiler aufweisen sondern die im Gerät erzeugte Wärme kann zur Dampferzeugung verwendet werden. Dies reduziert die Herstellungskosten des Geräts. Vorzugsweise befindet sich die Flüssigkeitsmenge in einem von den Nahrungsmitteln getrennten Bereich im Gefäss.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:
- Figur 1: eine schematische perspektivische Darstellung eines erfindungsgemässen Gargeräts;
- Figur 2: eine schematische Darstellung einer detaillierteren Ansicht einer inneren Oberfläche des Gargeräts gemäss Figur 1;
- Figur 3: eine schematische Darstellung einer Ansicht eines Gefäss zur Verwendung im Gargerät gemäss Figur 1 und
- Figur 4: eine schematische Darstellung der Funktionsweise des Gargeräts gemäss Figur 1.

### BESCHREIBUNG BEVORZUGTER AUSFÜHRUNGSFORMEN

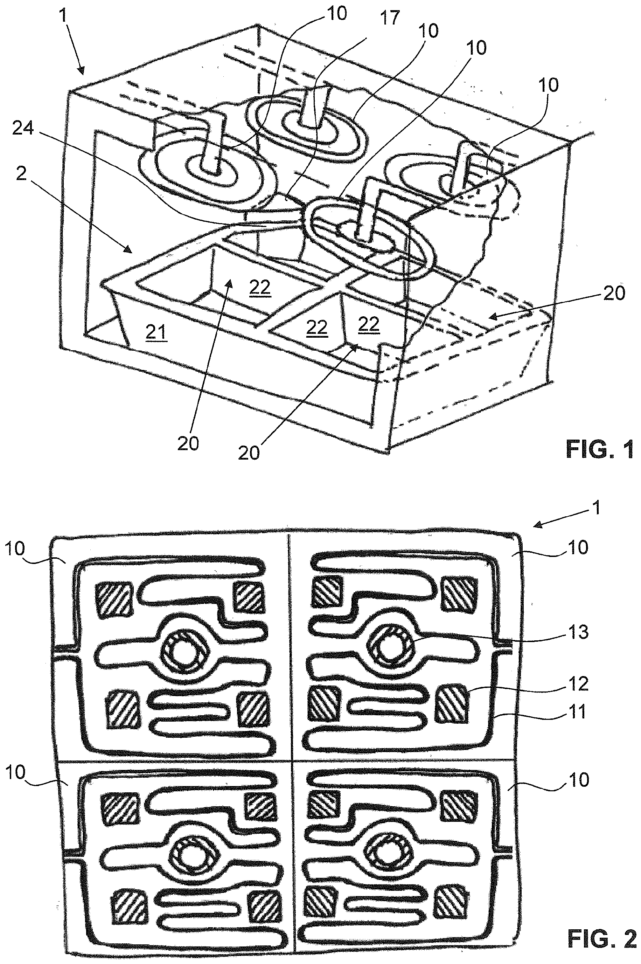

In Figur 1 ist ein erfindungsgemässes Gargerät 1 dargestellt. Es weist ein Gehäuse mit einem Garraum auf. Der Garraum ist über eine vorzugsweise schwenkbare Tür oder einen anhebbaren Deckel, hier nicht dargestellt, von aussen zugänglich. Das Gargerät 1 unterscheidet sich diesbezüglich nicht von bekannten Zubereitungsgeräten, wie z.B. einem Dampfgarer oder einem Mikrowellenofen. Das Gargerät 1 kann beispielsweise als Tischmodell oder als Einbaumodell zum Einbau in eine Küchenkombination ausgebildet sein.

Es ist vorzugsweise strombetrieben und an das Stromversorgungsnetzes des Haushaltes anschliessbar. Die hierfür notwendigen Teile des Geräts, wie beispielsweise ein Stromumwandler, Stecker, Kabel usw. sind nicht dargestellt.

Das Gerät 1 weist vorzugsweise Eingabemittel und eine Anzeige auf, welche als Benutzerinterface zur Eingabe von Steuerungsdaten an eine elektronische Steuerung des Geräts 1 dienen. Auch diese Elemente sind nicht dargestellt.

Die nicht dargestellten Elemente sind im Stand der Technik hinlänglich für Backöfen, Mikrowellengeräte, Grillgeräte, und Dampfgargeräte sowie Kombinationen davon bekannt. Sie lassen sich auf dieselbe Weise auch in den Gargeräten gemäss dieser Erfindung einsetzen.

Das Gargerät 1 weist eine Auflagefläche auf, auf welche ein Gefäss 2 gestellt werden kann. Diese Situation ist in Figur 1 dargestellt. Das Gefäss 2 kann auf dem Boden des Gargeräts 1 aufliegen. Es kann jedoch auch auf einer höher angeordneten, insbesondere höhenverstellbaren Fläche innerhalb des Garraums angeordnet werden. In einer anderen Ausführungsform weist das Gerät 1 lediglich seitliche Auflagenasen oder Einschubrinnen auf, in welche das Gefäss 2 oder ein Blech bzw. Gitter zur Auflage des Gefässes 2 einschiebbar ist. Vorzugsweise ist der Garraum jedoch so bemessen, dass er nicht viel grösser als ein zugehöriges Gefäss 2 ist. Vorzugsweise ist das Gefäss 2 lagefixiert im Garraum angeordnet und wird während der Zubereitung der Speisen nicht rotiert oder anderweitig bewegt.

Vorzugsweise weist der Garraum einen rechteckigen Querschnitt auf. Er ist vorzugsweise im Wesentlichen quaderförmig ausgebildet. Vorzugsweise ist auch die äussere Form des Geräts 1 quaderförmig.

Erfindungsgemäss ist das Gargerät 1 in mehrere neben einander liegende Garzonen 10 unterteilt, ohne dass jedoch Trennwände oder andere physische Unterteilungen im Garraum angeordnet sein müssen. Vorzugsweise weist das Gerät im Garraum keinerlei physische Trennmittel zwischen den einzelnen Garzonen 10 auf. Im hier dargestellten Beispiel ist der Garraum in vier Garzonen aufgeteilt, welche alle gleich gross sind und vier neben einander liegende Quader bilden. Gemeinsam bilden sie den Quader des Garraums; d.h. es sind vorzugsweise keine weiteren Bereiche neben diesen vier Bereichen im Garraum vorhanden.

Die Garzonen sind vorzugsweise gleich gross ausgebildet. Sie können jedoch auch unterschiedliche Grössen aufweisen. Es können auch mehr oder weniger als vier Garzonen vorhanden sein. So können lediglich zwei Garzonen vorhanden sein oder es können drei oder sechs Garzonen vorhanden sein. Des Weiteren können zwei oder mehrere einander benachbarte Garzonen mittels der Steuerung als eine gemeinsame Garzone betrachtet und gemeinsam angesteuert werden.

Jede Garzone 10 ist mit mindestens einem Garmittel ausgestattet. Das Garmittel kann beispielsweise ein Grill 11, Düsen 12 eines Dampfgarers oder ein Umluftgebläse eines Heissluftbackofens sein. Das Garmittel kann auch eine Mikrowellensonde eines Mikrowellengeräts, eine Heizschlange eines Backofens oder ein anderes Mittel zur Zubereitung von Speisen mittels Wärme oder Kälte sein. Vorzugsweise ist mindestens eine Garzone 10 mit zwei unterschiedlichen Garmitteln 11, 12, 13 ausgestattet. Vorzugsweise sind mehrere Garzonen 10 mit mehreren unterschiedlichen Garmitteln 11, 12, 13 ausgestattet. In dem in Figur 2 dargestellten Ausführungsbeispiel sind alle vier Garzonen 10 mit je drei Garmitteln versehen, wobei alle Zonen 10 gleich ausgestattet sind. Die einzelnen Zonen 10 können sich jedoch in dieser Ausstattung auch voneinander unterscheiden.

Die Garmittel 11, 12, 13 derselben Garzone 10 lassen sich in einer einfachen Ausführungsform nacheinander und lediglich getrennt voneinander aktivieren, so dass nur jeweils eines davon auf das darunter angeordnete Nahrungsmittel einwirkt. In einer bevorzugten Ausführungsform sind sie jedoch gleichzeitig aktiv, wobei sie vorzugsweise unabhängig voneinander steuerbar, insbesondere ein- und ausschaltbar sind. So ist es beispielsweise möglich, ein Stück Fleisch zuerst mit Dampf zu erhitzen und vorzukochen und zum Schluss noch während der Bedampfung zu grillieren.

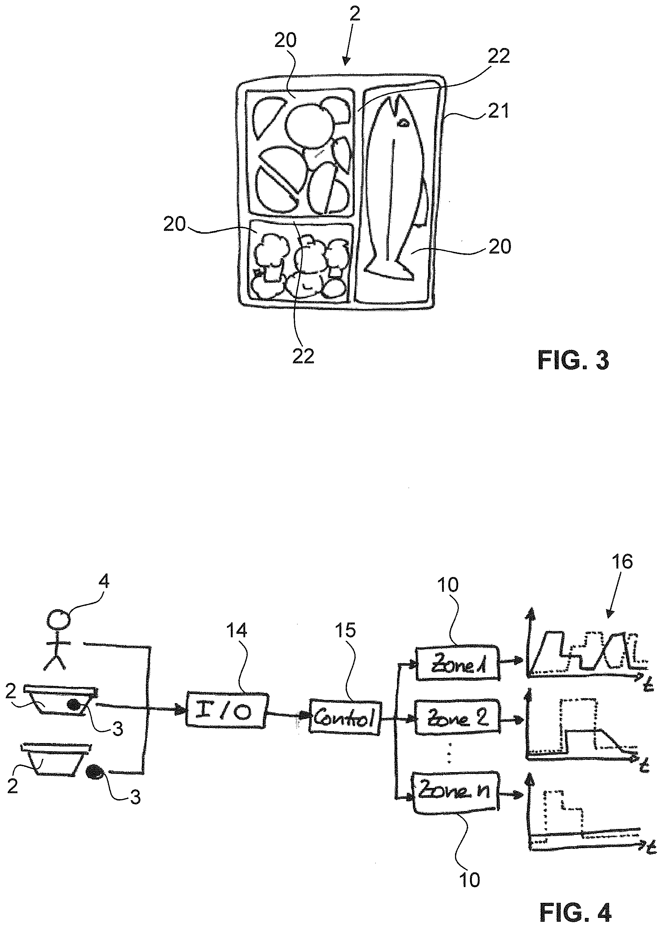

In Figur 3 ist eine Ausführungsform eines erfindungsgemässen Gefässes 2 dargestellt. Es dient der Zubereitung von unterschiedlichen Nahrungsmitteln. Dabei können einige der Nahrungsmittel bereits fertig gekocht, andere halbgar und dritte noch roh sein. Es ist insbesondere zur Aufnahme von vorproportionierten Roh-, Halbgar- oder Fertiggerichten geeignet, welche in dieser Verpackung zum Kauf angeboten und vom Benützer nur noch im Gargerät genussbereit zubereitet werden müssen.

Das Gefäss 2 weist einen im Wesentlichen rechteckförmigen Grundriss auf. Es ist quaderförmig oder kegelstumpfförmig mit sich leicht nach oben erweiternder Öffnung ausgebildet. Vorzugsweise ist das Gefäss 2 im Gebrauch oben offen. Für die Lagerung und den Transport des Gefässes ist es vorzugsweise mit einem entfernbaren Deckel luftdicht verschlossen.

Das Gefäss 2 weist eine Aufnahmekammer auf, welche von einer umlaufenden Seitenwand 21 umschlossen ist. Die Aufnahmekammer ist durch Trennwände 22 in mehrere Bereiche 20 unterteilt. Die Bereiche 20 sind so bemessen, dass sie jeweils einer Garzone 10 oder mehreren benachbarten Garzonen entsprechen. In der Darstellung gemäss Figur 1 ist je ein Bereich 20 einer Garzone 10 zugeordnet. Das Gefäss 2 gemäss Figur 3 kann ebenfalls in einem Gargerät mit vier Garzonen verwendet werden, wobei der längliche Bereich 10, in welchem ein Fisch dargestellt ist, zwei Garzonen zugeordnet ist.

Damit die Bereiche 20 des Gefässes 2 möglichst genau den Garzonen 10 zugeordnet werden können und damit dadurch die Nahrungsmittel möglichst optimal individuell, jedoch zeitgleich zubereitet werden können, ist im Gargerät 1 und/oder am Gefäss 2 mindestens eine Positionierhilfe 17, 24 vorhanden. In einer Ausführungsform ist diese Positionierhilfe 17, 24 ein Sensor, welche die Position des Gefässes 2 innerhalb des Gargeräts 1 erkennt und diese Position der Steuerung des Gargeräts 1 meldet. In einer weiteren Ausführungsform ist lediglich am Gefäss eine Markierung vorhanden, welche die Vorder- oder Rückseite des Gefässes markiert und angibt, welche Seite des Gefässes 2 nach vorn gerichtet sein muss.

In einer weiteren Ausführungsform sind mechanische Hilfen vorhanden. Im Beispiel gemäss Figur 1 weist der Garraum des Gargeräts 1 eine vorstehende Ecke 17 auf und das Gefäss 2 weist eine entsprechende Abschrägung 24 auf. Da das Gefäss 2 die Grundfläche des Garraums fast vollständig ausfüllt, kann das Gefäss 2 deshalb nur in dieser Drehposition vollständig in das Gerät 1 eingebracht werden. In den übrigen Drehpositionen würde die Ecke des Gefässes 2 an der vorstehenden Ecke 17 des Geräts 1 anstehen. Anderen Arten von mechanischen oder elektronischen Positionierungshilfen sind möglich.

In Figur 4 ist ein Ablaufschema dargestellt. Ein Benutzer 4 gibt über ein Benützerinterface 14, beispielsweise über eine Tastatur, Druck- oder Drehschalter die für die Zubereitung der Mahlzeit notwendigen Informationen ein. Hat der Benutzer 4 die Mahlzeit selber zusammengestellt, so wird er einen oder alle der folgenden Parameter eingeben: zu benützende Garzone und für jede Garzone zu verwendende Kochzeiten, Garmittel, Temperatur der Garmittel und/oder Art der Nahrungsmittel sowie deren Position im Garraum. Weitere Parameter sind möglich. Vorzugsweise verwendet der Benützer das oben beschriebene unterteilte Gefäss. Er kann jedoch auch für jede Garzone ein separates Gefäss verwenden und diese individuell zusammenstellen.

Um die Benutzung zu vereinfachen, ist das vorproportionierte Gericht jedoch bereits mit einer Zubereitungsanleitung 3 versehen. Diese kann auf dem Gefäss 2 selber angeordnet sein. Sie kann jedoch auch separat mit dem Gericht mitgeliefert oder anderweitig zur Verfügung gestellt sein. In einer bevorzugten Ausführungsform liest das Gerät 1 die Zubereitungsanleitung selber ohne Zutun des Benutzers. Die Zubereitungsanleitung kann beispielsweise ein Strichcode sein. Beispielsweise kann im Garraum eine Leseeinheit für diese Zubereitungsanleitung, insbesondere für den Strichcode, angeordnet sein. Die Leseeinheit kann auch auf der Aussenseite des Geräts 1 angeordnet sein, so dass der Benutzer vor dem Einlegen des Gefässes in den Garraum zuerst das Gefäss oder die separate Anleitung an die Leseeinheit halten muss. In einer anderen Ausführungsform gibt der Benutzer die Angaben der Zubereitungsleinleitung selber über das Benutzerinterface in das Gerät ein, z.B. in Form eines Zahlencodes. Vorzugsweise sind im Gerät mehrere Zubereitungsarten gespeichert, welche über den Strich- oder Zahlencode oder durch einfache Befehlseingaben abrufbar sind. Vorzugsweise erlaubt das Gerät 1 alle oben genannten Varianten der Eingabe der Zubereitungsparameter.

Die Steuerung 15 des Geräts übernimmt anschliessend diese eingegebenen oder gelesenen Vorgaben und steuert die einzelnen Garzonen 10 entsprechend an. Wie in Figur 4 dargestellt ist, wird dadurch jedoch einzelne Garzone 10 mit einer eigenen Zubereitungskurve 16 betrieben. Die Garzonen 10 können dabei beispielsweise zu unterschiedlichen Zeiten, zeitgleich oder zeitverschoben mit unterschiedlichen Garmitteln 11, 12, 13 und ebenso zeitgleich oder zeitverschoben mit unterschiedlichen Temperaturen betrieben werden.

In einer Weiterentwicklung des Systems sind auch Grundnahrungsmittel mit einem Rezeptcode versehen. Z.B. kann auf einer Karotten- oder Brokkoli-Verpackung ein vom Gargerät lesbarer Code aufgebracht sein, welcher die korrekte Zubereitungsart (z.B. Dampf oder Grill), die dem Gewicht entsprechende korrekte Zubereitungsdauer und - intensität angibt.

Das erfindungsgemässe Gerät erlaubt eine schnelle und unkomplizierte gemeinsame Zubereitung von Nahrungsmitteln, welche in unterschiedlichen Garzuständen vorliegen.

**BEZUGSZEICHENLISTE**

| | | | |
|---|---|---|---|
| 1 | Gargerät | 2 | Gefäss |
| 10 | Garzone | 20 | Bereich |
| 11 | erstes Garmittel | 21 | Seitenwand |
| 12 | zweites Garmittel | 22 | Trennwand |
| 13 | drittes Garmittel | 23 | Positionierhilfe |
| 14 | Benutzerschnittstelle | 24 | Positionierhilfe |
| 15 | Steuerung | | |
| 16 | Zubereitungskurve | 3 | Zubereitungsanweisung |
| 17 | Positionierhilfe | 4 | Benützer |

## Patentansprüche

1. Gargerät mit einem Garraum zur Zubereitung von Speisen, mit einer Steuerung und mit mindestens einem Garmittel (11, 12, 13), welches nach Massgabe der Steuerung im Garraum auf die zuzubereitenden Speisen einwirkt, wobei der Garraum eine drehpositionsfeste Aufnahme für die zuzubereitenden Speisen aufweist, wobei der Garraum in mindestens zwei Garzonen (10) unterteilt ist und wobei jede Garzone (10) ein eigenes Garmittel (11, 12, 13) aufweist, welches unabhängig von den Garmitteln (11, 12, 13) der mindestens einen anderen Garzone (10) ansteuerbar ist, **dadurch gekennzeichnet, dass** mindestens eine der Garzonen (10) mehr als ein Garmittel (11, 12, 13) aufweist, wobei mindestens ein erstes dieser Garmittel (11, 12, 13) derselben Garzone (10) einem anderen Zubereitungstyp entspricht als ein zweites dieser Garmittel (11, 12, 13) derselben Garzone (10).

2. Gargerät nach Anspruch 1, wobei die mindestens zwei Garzonen (10) auf einer Ebene des Garraums neben einander liegend ausgebildet sind.

3. Gargerät nach einem der Ansprüche 1 oder 2, wobei die mindestens zwei Garzonen (10) gegenseitig offen ausgebildet sind.

4. Gargerät nach Anspruch 1, wobei die mindestens zwei Garzonen (10) übereinander angeordnet sind.

5. Gargerät nach einem der Ansprüche 1 bis 4, wobei jedes Garmittel (11, 12, 13) ausschliesslich einer einzigen Garzone (10) zugeordnet ist.

6. Gargerät nach einem der Ansprüche 1 bis 5, wobei Garmittel (11, 12, 13) vorhanden sind, welche mehreren Garzonen (10) zugeordnet sind.

7. Gargerät nach einem der Ansprüche 1 bis 6, wobei allen Garzonen (10) mehrere Garmittel (11, 12, 13) zugeordnet sind.

8. Gargerät nach einem der Ansprüche 1 bis 7, wobei allen Garzonen (10) mindestens ein eigenes Garmittel (11, 12, 13) von demselben Zubereitungstyp zugeordnet ist.

9. Gargerät nach einem der Ansprüche 1 bis 8, wobei die Zubereitungstypen mindestens aus zwei Typen der folgenden Gruppe bestehen: Dampfgaren, Grillieren, Zubereitung mit Mikrowelle, Zubereitung mit Umluft, Zubereitung im Backofen mit Heizung.

10. Gargerät nach einem der Ansprüche 1 bis 9, wobei die Garzonen (10) annähernd einen gemeinsamen Quader bilden.

11. Gargerät nach einem der Ansprüche 1 bis 10, wobei die Aufnahme zur Aufnahme eines die Speisen beinhaltenden Gefässes (2) ausgebildet ist, welches einen im Wesentlichen rechteckförmigen Grundriss aufweist.

12. Gargerät nach einem der Ansprüche 1 bis 11, wobei die Garzonen (10) so angeordnet und in ihrer Form so ausgebildet sind, dass sie zur gleichmässigen und gleichzeitigen Zubereitung von in einem im Wesentlichen quaderförmigen Gefäss (2) angeordneten Speisen geeignet sind.

13. Gargerät nach einem der Ansprüche 1 bis 12, wobei im Garraum ein Positionierungsmittel (17) zur lagedefinierten Positionierung eines die zuzubereitenden Speisen beinhaltendes Gefässes (2) vorhanden ist.

14. Gargerät nach einem der Ansprüche 1 bis 13, wobei die Aufnahme eine Auflagefläche ist.

15. System zur Zubereitung von Speisen, wobei das System ein Gargerät (1) gemäss einem der Ansprüche 1 bis 13 sowie ein Gefäss (2) zur Aufnahme der zuzubereitenden Speisen umfasst, wobei das Gefäss (2) in mindestens zwei neben einander liegende Bereiche (20) unterteilt ist, welche so bemessen sind, dass jeder dieser Bereiche (20) in einer eigenen Garzone (10) oder in einer eigenen Gruppe von Garzonen (10) des Garraums einbringbar ist.

16. System nach Anspruch 15, wobei das Gefäss (2) für den bestimmungsgemässen Gebrauch im Gargerät (1) mindestens teilweise nach oben offen ausgebildet ist, wobei vorzugsweise eine vor Gebrauch entfernbare Abdeckung eine obere Öffnung des Gefässes (2) verschliesst.

17. System nach einem der Ansprüche 15 oder 16, wobei das Gefäss (2) mit mindestens einer Positionierhilfe zur vordefinierten Positionierung des Gefässes (2) im Garraum versehen ist.

## Claims

1. Cooking device comprising a cooking chamber for preparing food, comprising a controller and comprising at least one cooking means (11, 12, 13) which acts on the food to be prepared in the cooking chamber in a manner governed by the controller, wherein the cooking chamber has a receptacle for the food to be prepared, which receptacle is fixed in respect of its rotational position, wherein the cooking chamber is subdivided into at least two cooking zones (10) and wherein each cooking zone (10) has a dedicated cooking means (11, 12, 13) which can be actuated independently of the cooking means (11, 12, 13) of the at least one other cooking zone (10), **characterized in that** at least one of the cooking zones (10) has more than one cooking means (11, 12, 13), wherein at least a first of these cooking means (11, 12, 13) of the same cooking zone (10) corresponds to a different type of preparation than a second of these cooking means (11, 12, 13) of the same cooking zone (10).

2. Cooking device according to Claim 1, wherein the at least two cooking zones (10) are formed on one plane of the cooking chamber in a manner lying next to one another.

3. Cooking device according to either of Claims 1 and 2, wherein the at least two cooking zones (10) are formed in a manner open to one another.

4. Cooking device according to Claim 1, wherein the at least two cooking zones (10) are arranged one above the other.

5. Cooking device according to one of Claims 1 to 4, wherein each cooking means (11, 12, 13) is exclusively associated with a single cooking zone (10).

6. Cooking device according to one of Claims 1 to 5, wherein cooking means (11, 12, 13) which are associated with a plurality of cooking zones (10) are present.

7. Cooking device according to one of Claims 1 to 6, wherein a plurality of cooking means (11, 12, 13) are associated with all of the cooking zones (10).

8. Cooking device according to one of Claims 1 to 7, wherein at least one dedicated cooking means (11, 12, 13) for the same type of preparation is associated with all of the cooking zones (10).

9. Cooking device according to one of Claims 1 to 8, wherein the types of preparation comprise at least two types from the following group: steam cooking, grilling, preparation using a microwave, preparation using circulating air, preparation in the oven with heating.

10. Cooking device according to one of Claims 1 to 9, wherein the cooking zones (10) approximately form a combined cuboid.

11. Cooking device according to one of Claims 1 to 10, wherein the receptacle is designed for receiving a vessel (2) which contains the food and which has a substantially rectangular footprint.

12. Cooking device according to one of Claims 1 to 11, wherein the cooking zones (10) are arranged in such a way and designed in respect of their shape in such a way that they are suitable for uniformly and simultaneously preparing food which is arranged in a substantially cuboidal vessel (2).

13. Cooking device according to one of Claims 1 to 12, wherein a positioning means (17) for positionally defined positioning of a vessel (2) which contains the food to be prepared is present in the cooking chamber.

14. Cooking device according to one of Claims 1 to 13, wherein the receptacle is a supporting surface.

15. System for preparing food, wherein the system comprises a cooking device (1) according to one of Claims 1 to 13 and also a vessel (2) for receiving the food to be prepared, wherein the vessel (2) is subdivided into at least two regions (20) which are situated next to one another and which are dimensioned such that each of these regions (20) can be inserted into a dedicated cooking zone (10) or into a dedicated group of cooking zones (10) of the cooking chamber.

16. System according to Claim 15, wherein the vessel (2) is designed to be at least partially open at the top for use as intended in the cooking device (1), wherein a cover, which can be removed before use, preferably closes an upper opening of the vessel (2).

17. System according to one of Claims 15 and 16, wherein the vessel (2) is provided with at least one positioning aid for predefined positioning of the vessel (2) in the cooking chamber.

## Revendications

1. Appareil de cuisson comportant un espace de cuisson pour la préparation d'aliments, une commande et au moins un moyen de cuisson (11, 12, 13) qui agit sur les aliments à préparer dans l'espace de cuisson conformément à la commande, dans lequel l'espace de cuisson comporte un réceptacle fixe en rotation pour les aliments à préparer, dans lequel l'espace de cuisson est divisé en au moins deux zones de cuisson (10) et dans lequel chaque zone de cuisson (10) comporte son propre moyen de cuisson (11, 12, 13), qui peut être commandé indépendamment des moyens de cuisson (11, 12, 13) de l'au moins une autre zone de cuisson (10), **caractérisé en ce qu'**au moins l'une des zones de cuisson (10) comporte plus d'un moyen de cuisson (11, 12, 13), dans lequel au moins un premier desdits moyens de cuisson (11, 12, 13) d'une même zone de cuisson (10) correspond à un type de préparation autre que celui d'un second desdits moyens de cuisson (11, 12, 13) de la même zone de cuisson (10).

2. Appareil de cuisson selon la revendication 1, dans lequel les au moins deux zones de cuisson (10) sont réalisées l'une à côté de l'autre sur un plan de l'espace de cuisson.

3. Appareil de cuisson selon l'une quelconque des revendications 1 ou 2, dans lequel lesdites au moins deux zones de cuisson (10) sont réalisées de manière mutuellement ouverte.

4. Appareil de cuisson selon la revendication 1, dans lequel lesdites au moins deux zones de cuisson (10) sont disposées l'une au-dessus de l'autre.

5. Appareil de cuisson selon l'une quelconque des revendications 1 à 4, dans lequel chaque moyen de cuisson (11, 12, 13) est associé exclusivement à une zone de cuisson (10) unique.

6. Appareil de cuisson selon l'une quelconque des revendications 1 à 5, dans lequel il est prévu des moyens de cuisson (11, 12, 13) qui sont associés à une pluralité de zones de cuisson (10).

7. Appareil de cuisson selon l'une quelconque des revendications 1 à 6, dans lequel une pluralité de moyens de cuisson (11, 12, 13) sont associés à toutes les zones de cuisson (10).

8. Appareil de cuisson selon l'une quelconque des revendications 1 à 7, dans lequel au moins un moyen de cuisson propre (11, 12, 13) d'un même type de préparation est associé à toutes les zones de cuisson (10).

9. Appareil de cuisson selon l'une quelconque des revendications 1 à 8, dans lequel les types de préparation consistent en au moins deux types du groupe suivant : cuisson à la vapeur, grillage, préparation au micro-ondes, préparation à l'air pulsé, préparation au four avec chauffage.

10. Appareil de cuisson selon l'une quelconque des revendications 1 à 9, dans lequel les zones de cuisson (10) forment approximativement un parallélépipède commun.

11. Appareil de cuisson selon l'une quelconque des revendications 1 à 10, dans lequel le réceptacle est conçu pour recevoir un récipient (2) contenant les aliments, lequel récipient présente un plan de masse sensiblement rectangulaire.

12. Appareil de cuisson selon l'une quelconque des revendications 1 à 11, dans lequel les zones de cuisson (10) sont disposées et formées de manière à ce qu'elles conviennent à la préparation uniforme et simultanée d'aliments disposés dans un récipient de forme sensiblement cubique (2).

13. Appareil de cuisson selon l'une quelconque des revendications 1 à 12, dans lequel il est prévu dans l'espace de cuisson un moyen de positionnement (17) pour le positionnement défini par l'emplacement d'un récipient (2) contenant les aliments à préparer.

14. Appareil de cuisson selon l'une quelconque des revendications 1 à 13, dans lequel le réceptacle est une surface d'appui.

15. Système pour la préparation d'aliments, dans lequel le système comprend un appareil de cuisson (1) selon l'une quelconque des revendications 1 à 13 et un récipient (2) destiné à recevoir les aliments à préparer, dans lequel le récipient (2) est divisé en au moins deux régions adjacentes (20) qui sont dimensionnées de manière à ce que chacune de ces régions (20) puisse être introduite dans une zone de cuisson propre (10) ou dans un groupe propre de zones de cuisson (10) de l'espace de cuisson.

16. Système selon la revendication 15, dans lequel le réceptacle (2) est au moins partiellement ouvert vers le haut pour l'utilisation prévue dans l'appareil de cuisson (1), dans lequel de préférence un couvercle, qui peut être retiré avant utilisation, ferme une ouverture supérieure du récipient (2).

17. Système selon l'une quelconque des revendications 15 ou 16, dans lequel le récipient (2) est pourvu d'au moins une aide au positionnement pour un positionnement prédéfini du récipient (2) dans l'espace de cuisson.
